# EUROPEAN PATENT APPLICATION

(11) **EP 4 455 609 A1**
(43) Date of publication of application: **30.10.2024**
(21) Application number: 24171693.5
(22) Date of filing: 22.04.2024
(51) Int. Cl.: G01C 21/00, G06F 18/22, G06F 18/23, G08G 1/01

(54) **SYSTEM AND METHOD FOR IDENTIFYING VEHICLE STOP ZONES**

(30) Priority: 25.04.2023 US 202363461738 P
(71) Applicant: GEOTAB Inc., Oakville, ON L6H 7V2 (CA)
(72) Inventor: Lewis, Daniel J., Cambridge (CA)
(74) Representative: Fleuchaus & Gallo Partnerschaft mbB

(57) **Abstract**

Disclosed are systems for identifying vehicle stop zones. The systems comprise: at least one data storage operable to store at least telematics data and map data; and at least one processor in communication with the at least one data storage, the at least one processor operable to: define a search zone, using the map data, corresponding to a geographical area within which vehicle stop zones are to be identified; identify, using the telematics data, a plurality of vehicle stop points located within the search zone, each of the vehicle stop points representing a location at which a vehicle stopped; dynamically partition the search zone into a plurality of search subzones based at least in part on a number of vehicle stop points present within the search zone; within each search subzone, identify one or more vehicle stop clusters, each vehicle stop cluster comprising at least one of the vehicle stop points; and identify vehicle stop zones by combining vehicle stop clusters that share one or more of the vehicle stop points. Also disclosed are methods for identifying vehicle stop zones and non-transitory computer-readable mediums having instructions stored thereon executable by at least one processor to implement the methods.

## Description

### TECHNICAL FIELD

The present disclosure generally relates to the use of telematics data to provide zone information. More specifically, the present disclosure relates to systems and methods for identifying vehicle stop zones.

### BACKGROUND

Telematics data collected from vehicles may include information, parameters, attributes, characteristics, and/or features associated with the vehicles. For example, telematics data may include data relating to various components of the vehicle (e.g., airbag status, engine data, brake data, transmission data, and the like), location data (e.g., a GPS location), vehicle identifying information, etc.

While telematics data may be used to gain insights about various aspects of the vehicles from which it is collected, the telematics data may also be used to provide insights about the area or areas within which the vehicles operate. For example, using telematics data relating to the location of a vehicle, a user may be able to determine common routes traveled by the vehicle, common stopping locations of the vehicle, and the like, and use that information to identify various types of zones of the area or areas within which the vehicle operates. One example of a zone that may be identified using telematics data is a vehicle stop zone - i.e., an area within which one or more vehicles stop. Examples of vehicle stop zones may include parking lots, roadways having on-street parking, intersections, etc.

As will be appreciated, the identification of zones, such as vehicle stop zones, may have a number of applications for users managing a vehicle fleet. However, conventional techniques for zone identification may not be particularly well-suited for efficient large-scale processing of telematics data (e.g., telematics data collected from a vehicle fleet) to identify the zones. As well, conventional techniques may not take into account various types of boundaries present in the areas within which the vehicles operate, thereby potentially providing inaccurate zone identifications.

A need therefore exists for improved systems and methods for identifying zones such as vehicle stop zones.

### SUMMARY

In one aspect, the present disclosure relates to a system for identifying vehicle stop zones, the system comprising: at least one data storage operable to store at least telematics data and map data; and at least one processor in communication with the at least one data storage, the at least one processor operable to: define a search zone, using the map data, corresponding to a geographical area within which vehicle stop zones are to be identified; identify, using the telematics data, a plurality of vehicle stop points located within the search zone, each of the vehicle stop points representing a location at which a vehicle stopped; dynamically partition the search zone into a plurality of search subzones based at least in part on a number of vehicle stop points present within the search zone; within each search subzone, identify one or more vehicle stop clusters, each vehicle stop cluster comprising at least one of the vehicle stop points; and identify vehicle stop zones by combining vehicle stop clusters that share one or more of the vehicle stop points.

According to an embodiment, the at least one processor is operable to dynamically partition the search zone into the plurality of search subzones by: generating a plurality of initial search subzones; and adjusting an area of each initial search subzone such that each of the search subzones encompasses a number of vehicle stop points that is greater than or equal to a selected minimum number of vehicle stop points, less than or equal to a selected maximum number of vehicle stop points, or a combination thereof.

According to an embodiment, the at least one processor is operable to combine the vehicle stop clusters that share one or more of the vehicle stop points by: generating a graph comprising a plurality of nodes and edges, wherein each node represents one of the vehicle stop clusters and each edge represents the sharing of the one or more vehicle stop points; identifying one or more node groupings, each node grouping comprising a plurality of nodes that are interconnected by one or more edges; and generating, for each node grouping, one or more vehicle stop superclusters by combining the vehicle stop points of each of the vehicle stop clusters represented by the nodes of the node groupings.

According to an embodiment, the at least one processor is further operable to divide each of the one or more vehicle stop clusters that span one or more boundaries into discrete vehicle stop clusters.

According to an embodiment, the at least one processor is further operable to divide each of the one or more vehicle stop clusters into the discrete vehicle stop clusters by: generating, for each vehicle stop cluster that spans the one or more boundaries, a cluster polygon that encompasses the vehicle stop cluster; generating, for each of the one or more boundaries, a boundary polygon representing the boundary; and dividing the cluster polygon into a plurality of cluster sub-polygons based on an overlap between the cluster polygon and the boundary polygon, each of the cluster sub-polygons encompassing one of the discrete vehicle stop clusters.

According to an embodiment, the at least one processor is operable to divide the cluster polygon into the plurality of cluster sub-polygons by subtracting an area of the cluster polygon that overlaps with an area of each of the boundary polygons.

According to an embodiment, each cluster polygon is a convex hull of the vehicle stop cluster spanning the one or more boundaries.

According to an embodiment, each of the one or more boundaries is an infrastructure boundary, a topographic boundary, a regulatory boundary, or a combination thereof.

According to an embodiment, each of the one or more boundaries may be an intersection of different roadway types.

According to an embodiment, the at least one processor is further operable to identify the vehicle stop zones by generating, for each vehicle stop cluster, a bounding polygon encompassing the vehicle stop cluster.

According to an embodiment, the at least one processor is operable to generate each bounding polygon by: generating a bounding graph comprising a plurality of bounding nodes and bounding edges interconnected therewith, each bounding node representing one of the vehicle stop points of the vehicle stop cluster, and each bounding edge representing a shortest distance between two of the bounding nodes; identifying border nodes of the bounding graph, the border nodes being bounding nodes that are located at a perimeter of the vehicle stop cluster; and generating the bounding polygon from the border nodes and the edges interconnecting the border nodes.

According to an embodiment, the at least one processor is operable to generate the bounding graph by performing a Delaunay Triangulation of the vehicle stop points of each vehicle stop cluster.

According to an embodiment, the at least one processor is further operable to generate the bounding polygon by removing any bounding edges having a length greater than a predetermined threshold.

According to an embodiment, the at least one processor is operable to: identify border nodes interconnected with more than two other border nodes; identify whether any of the more than two other border nodes are subgraph nodes in that they form at least part of a subgraph of the bounding graph; and generate the bounding polygon from the bounding polygon from the border nodes, the subgraph nodes, and the boundary edges connecting each thereof.

According to an embodiment, the at least one processor is further operable to remove any within-cluster outliers from each of the vehicle stop clusters.

According to an embodiment, the at least one processor is operable to remove any within-cluster outliers from each of the vehicle stop clusters based at least in part on a nearest-neighbor distance of the vehicle stop cluster.

According to an embodiment, the at least one processor is operable to remove any within-cluster outliers from each of the vehicle stop clusters based on an interquartile range of a median nearest-neighbor distance of the vehicle stop cluster.

According to an embodiment, the at least one processor is operable to identify the one or more vehicle stop clusters using a clustering algorithm.

According to an embodiment, the clustering algorithm is a density-based clustering algorithm.

According to an embodiment, the clustering algorithm is a Hierarchical Density-Based Spatial Clustering of Applications with Noise (HDBSCAN) algorithm.

According to an embodiment, the system is a multi-processor system in that the at least one processor comprises two or more processors, each of which is operable to perform one or more operations of the system.

In a further aspect, the present disclosure relates to a method for identifying vehicle stop zones, the method comprising operating at least one processor to: receive telematics data and map data; define a search zone, using the map data, corresponding to a geographical area within which vehicle stop zones are to be identified; identify, using the telematics data, a plurality of vehicle stop points located within the search zone, each of the vehicle stop points representing a location at which a vehicle stopped; dynamically partition the search zone into a plurality of search subzones based at least in part on a number of vehicle stop points present within the search zone; within each search subzone, identify one or more vehicle stop clusters, each vehicle stop cluster comprising at least one of the vehicle stop points; and identify vehicle stop zones by combining vehicle stop clusters that share one or more of the vehicle stop points.

According to an embodiment, the dynamic partitioning of the search zone into the plurality of search zones comprises operating the at least one processor to: generate a plurality of initial search subzones; and adjust an area of each initial search subzone such that each of the search subzones encompasses a number of vehicle stop points that is greater than or equal to a selected minimum number of vehicle stop points, less than or equal to a selected maximum number of vehicle stop points, or a combination thereof.

According to an embodiment, the combining of the of the vehicle stop clusters comprises operating the at least one processor to: generate a graph comprising a plurality of nodes and edges, wherein each node represents one of the vehicle stop clusters and each edge represents the sharing of the one or more vehicle stop points; identify one or more node groupings, each node grouping comprising a plurality of nodes that are interconnected by one or more edges; and generate, for each node grouping, one or more vehicle stop superclusters by combining the vehicle stop points of each of the vehicle stop clusters represented by the nodes of the node groupings.

According to an embodiment, the method further comprises operating the at least one processor to divide each of the one or more vehicle stop clusters that span one or more boundaries into discrete vehicle stop clusters.

According to an embodiment, the dividing of each of the one or more vehicle stop clusters into the discrete vehicle stop clusters comprises operating the at least one processor to: generate, for each vehicle stop cluster that spans the one or more boundaries, a cluster polygon that encompasses the vehicle stop cluster; generate, for each of the one or more boundaries, a boundary polygon representing the boundary; and divide the cluster polygon into a plurality of cluster sub-polygons based on an overlap between the cluster polygon and the boundary polygon, each of the cluster sub-polygons encompassing one of the discrete vehicle stop clusters.

According to an embodiment, the dividing of the cluster polygon into the plurality of cluster sub-polygons comprises operating the at least one processor to subtract an area of the cluster polygon that overlaps with an area of each of the boundary polygons.

According to an embodiment, each cluster polygon is a convex hull of the vehicle stop cluster spanning the one or more boundaries.

According to an embodiment, each of the one or more boundaries is an infrastructure boundary, a topographic boundary, a regulatory boundary, or a combination thereof.

According to an embodiment, each of the one or more boundaries is an intersection of different roadway types.

According to an embodiment, the identifying of the vehicle stop zones further comprises operating the at least one processor to generate, for each vehicle stop cluster, a bounding polygon encompassing the vehicle stop cluster.

According to an embodiment, the generating of each bounding polygon comprises operating the at least one processor to: generate a bounding graph comprising a plurality of bounding nodes and bounding edges interconnected therewith, each bounding node representing one of the vehicle stop points of the vehicle stop cluster, and each bounding edge representing a shortest distance between two of the bounding nodes; identify border nodes of the bounding graph, the border nodes being bounding nodes that are located at a perimeter of the vehicle stop cluster; and generate the bounding polygon from the border nodes and the edges interconnecting the border nodes.

According to an embodiment, the generating of the bounding graph comprises operating the at least one processor to perform a Delaunay Triangulation of the vehicle stop points of each vehicle stop cluster.

According to an embodiment, the generating of the bounding graph further comprises operating the at least one processor to remove any bounding edges having a length greater than a predetermined threshold.

According to an embodiment, the method comprises operating the at least one processor to: identify border nodes interconnected with more than two other border nodes; identify whether any of the more than two other border nodes are subgraph nodes in that they form at least part of a subgraph of the bounding graph; and generate the bounding polygon from the bounding polygon from the border nodes, the subgraph nodes, and the boundary edges connecting each thereof.

According to an embodiment, the method further comprises operating the at least one processor to remove any within-cluster outliers from each of the vehicle stop clusters.

According to an embodiment, the removing of any within-cluster outliers comprises operating the at least one processor to remove any within-cluster outliers from each of the vehicle stop clusters based at least in part on a nearest-neighbor distance of the vehicle stop cluster.

According to an embodiment, the removing of any within-cluster outliers comprises operating the at least one processor to remove any within-cluster outliers from each of the vehicle stop clusters based on an interquartile range of a median nearest-neighbor distance of the vehicle stop cluster.

According to an embodiment, the identifying of the one or more vehicle stop clusters comprises operating the at least one processor to identify the one or more vehicle stop clusters using a clustering algorithm.

According to an embodiment, the clustering algorithm is a density-based clustering algorithm.

According to an embodiment, the clustering algorithm is a Hierarchical Density-Based Spatial Clustering of Applications with Noise (HDBSCAN) algorithm.

According to an embodiment, the method comprises operating at least two processors to each perform one or more operations of the method.

In a further aspect, the present disclosure relates to a non-transitory computer-readable medium having instructions stored thereon executable by at least one processor to implement the method as described herein.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 is a block diagram of various components interacting with an example fleet management system according to an embodiment of the present disclosure.
FIG. 2 is a block diagram of an example fleet management system interacting with an example telematics device and an example vehicle, according to an embodiment of the present disclosure.
FIG. 3 is a block diagram of an example computing device interacting with an example fleet management system, according to an embodiment of the present disclosure.
FIG. 4 is a flowchart of an example method for identifying vehicle stop zones, according to an embodiment of the present disclosure.
FIG. 5 is an example search zone partitioned into a plurality of search subzones, according to an embodiment of the present disclosure.
FIG. 6A is another example of a search zone partitioned into a plurality of search subzones, according to an embodiment of the present disclosure.
FIG. 6B is a zoomed-in view of the area covered by one of the search subzones shown in FIG. 6A, according to an embodiment of the present disclosure.
FIG. 6C is a zoomed-in view of the area covered by one of the search subzones shown in FIG. 6A, according to an embodiment of the present disclosure.
FIG. 6D is a zoomed-in view of the area covered by one of the search subzones shown in FIG. 6A, according to an embodiment of the present disclosure.
FIG. 6E is a graph generated based on vehicle stop clusters identified within each of the search subzones shown in FIG. 6B, FIG. 6C, and FIG. 6D, according to an embodiment of the present disclosure.
FIG. 6F shows node groupings identified from the graph shown in FIG. 6E, according to an embodiment of the present disclosure.
FIG. 6G shows the search zone and search subzones of FIG. 6A with vehicle stop clusters merged based on the node groupings of FIG. 6F, according to an embodiment of the present disclosure.
FIG. 7A is another example of a search zone, the search zone having identified therein a vehicle stop cluster that spans a boundary, according to an embodiment of the present disclosure.
FIG. 7B shows a cluster polygon encompassing the vehicle stop cluster shown in FIG. 7A, according to an embodiment of the present disclosure.
FIG. 7C shows a boundary polygon overlaying the cluster polygon shown in FIG. 7B, according to an embodiment of the present disclosure.
FIG. 7D shows the cluster polygon of FIG. 7B divided into a plurality of cluster sub-polygons by the boundary polygon, according to an embodiment of the present disclosure.
FIG. 8A shows an identified vehicle stop cluster, according to an embodiment of the present disclosure.
FIG. 8B is a bounding graph representing the vehicle stop cluster of FIG. 8A generated using a Delaunay Triangulation, according to an embodiment of the present disclosure.
FIG. 8C shows the bounding graph of FIG. 8B with bounding edges having a length greater than a predetermined threshold removed, according to an embodiment of the present disclosure.
FIG. 8D is an ordered graph of the boundary graph of FIG. 8C, according to an embodiment of the present disclosure.
FIG. 8E shows a bounding polygon based on the vehicle stop cluster of FIG. 8A, according to an embodiment of the present disclosure.

### DETAILED DESCRIPTION

Telematics data may be used not only to provide information about a vehicle, but also to provide insights about an area within which the vehicle operates. For example, using telematics data such as vehicle location data, data relating to various components of a vehicle, and the like, a user may identify zones in an area such as routes along which a vehicle operates, vehicle stop zones, etc. In particular, the identification of vehicle stop zones (e.g., parking lots, intersections, etc.) may have a number of applications. For example, a user may classify identified vehicle stop zones as areas of interest (e.g., a work parking lot, a customer parking lot, etc.) and track when a vehicle enters or leaves each area of interest.

As will be appreciated, the identification of vehicle stop zones and the applications thereof may be of particular use to, for example, a user managing a vehicle fleet. However, for a given area and vehicle fleet, there may be hundreds of thousands, or even millions, of data points to process for identifying vehicle stop zones, and conventional techniques for vehicle stop zone identification may not be well-suited to efficiently process such amounts of data.

Further, conventional techniques for identifying vehicle stop zones may not consider various types of boundaries (e.g., infrastructure boundaries, topographical boundaries, regulatory boundaries, etc.) that may be present in areas in which vehicles operate. As a result, the identified vehicle stop zones may not accurately reflect the zones at which the vehicle stops. For example, using conventional methods, two discrete vehicle stop zones (e.g., two separate parking lots) separated by an infrastructure boundary such as a roadway may be incorrectly identified as a single vehicle stop zone.

Thus, it is an objective of the present disclosure to provide advantageous systems and methods for identifying vehicle stop zones that are capable of addressing shortcomings of the conventional techniques. For example, in some embodiments, the systems and methods of the present disclosure are capable of efficient large-scale processing of telematics data. As a further example, in some embodiments, the systems and methods of the present disclosure are capable of accounting for boundaries (e.g., infrastructure boundaries, topographical boundaries, and regulatory boundaries) to provide accurate identification of discrete vehicle stop zones.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

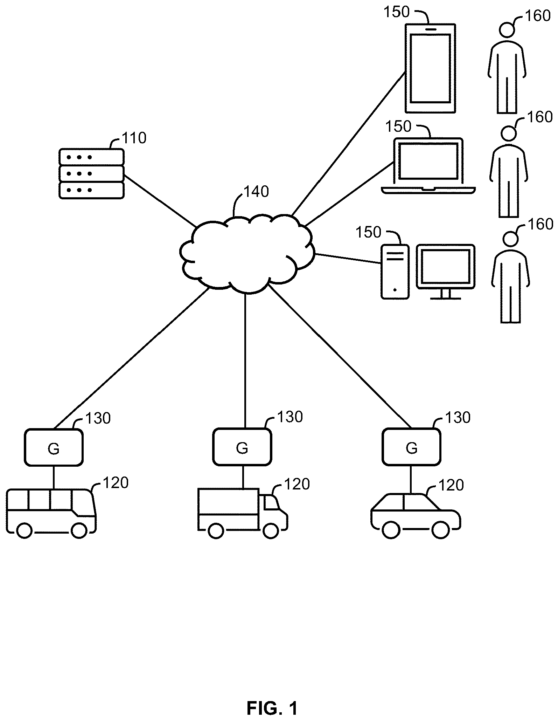

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

The telematics devices 130 may be standalone devices that are removably installed in the vehicles 120 (e.g., aftermarket telematics devices). Additionally, or alternatively, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the telematics data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

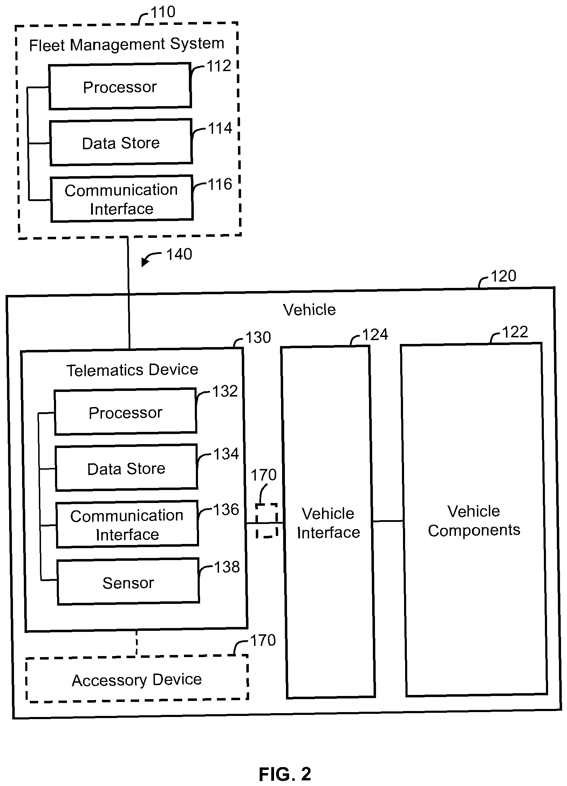

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (QPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130, map data obtained from a map information provider, or a combination thereof.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data and collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

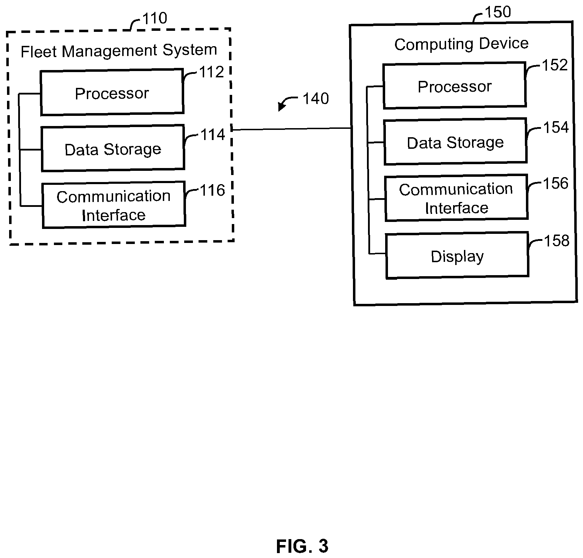

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removable connected to the computing device 150. The display 158 may display various visual representations of the telematics data.

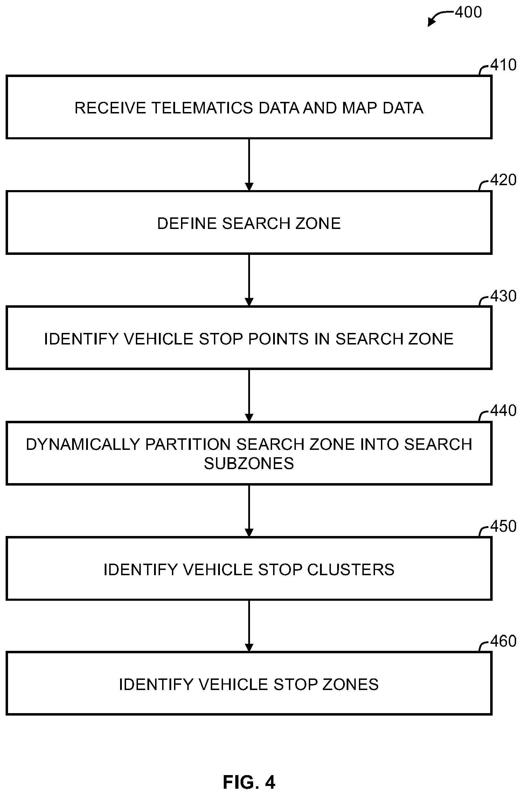

Referring now to FIG. 4, there is shown a flow chart of an example method for identifying a vehicle stop zone according to an embodiment of the present disclosure. As shown, a method for identifying a vehicle stop zone (400) may comprise operating at least one processor to: receive telematics data and map data (410); define a search zone, using the map data, corresponding to a geographical area within which vehicle stop zones are to be identified (420); identify, using the telematics data, a plurality of vehicle stop points located within the search zone, each of the vehicle stop points representing a location at which a vehicle stopped (430); dynamically partition the search zone into a plurality of search subzones based at least in part on a number of vehicle stop points present within the search zone (440); within each search subzone, identify one or more vehicle stop clusters, each vehicle stop cluster comprising at least one of the vehicle stop points (450); and identify vehicle stop zones by combining vehicle stop clusters that share one or more of the vehicle stop points (460).

The method 400 may be implemented using any suitable combination of hardware and software, such as those described in reference to FIG. 1 to FIG. 3. For example, one or more operations (e.g., operations 410, 420, 430, 440, 450, and/or 460) of the method 400 may be implemented at the fleet management system 110 (e.g., by the processor 112 executing instructions stored on the data storage 114), at the telematics devices 130 (e.g., by the processor 132 executing instructions stored on the data storage 134), at the computing devices 150 (e.g., by the processor 152 executing instructions stored on the data storage 154), or a combination thereof. Further, as described herein, in some embodiments, the methods of the present disclosure are capable of processing telematics data at a large-scale. Thus, it will be appreciated that the methods of the present disclosure require implementation via a computer (e.g., one or more of the processors 112, 132, and 152).

At operation 410 of the method 400, telematics data and map data may be received. As described herein, the telematics data may be collected from, for example, the telematics devices 130 installed in the vehicles 120, and may include various types of information, parameters, attributes, characteristics, and/or features associated with the vehicles (e.g., collected via the vehicle interface 124). As will be described herein, the telematics data may be used to determine when, and the location at which, a vehicle stops. Thus, it follows that the telematics data may generally include vehicle data such as geospatial data, engine data, and/or any other data that may be used to determine that a vehicle stopped and where the stop occurred. In more detail, the vehicle data may originate from various sources in the vehicle 120 and/or the telematics device 130. For example, geospatial data such as location data may be obtained from a GPS receiver of the telematics device 130. As well, or alternatively, geospatial data such as speed data may be obtained from a speed sensor of the vehicle 120 or derived from the location data obtained from a GPS sensor of the telematics device 130. As a further example, engine data may be obtained by the telematics devices 130 from the vehicle components 124 via the vehicle interface 126 and may include data indicating the status of vehicle engine ignition.

The map data may include information, parameters, attributes, characteristics, and/or features associated with a geographical area. For example, the map data may include information relating to the location, placement, size, shape, and/or design of infrastructure (e.g., road networks comprising roadways such as, but not limited to, roads, streets, highways, freeways, alleyways, etc.), topographical features (e.g., rivers, mountains, hills, greenways, etc.), regulatory features, (e.g., country borders, state or provincial borders, city limits, counties, neighbourhoods, etc.) or a combination thereof. The map data may be obtained from, for example, one or more various map information providers such as OpenStreetMap (OSM).

The telematics data and map data may each be independently received using any suitable devices and systems, such as those described above in relation to FIG. 1 to FIG. 3. For example, the various types of data may be received by one or more of the telematics devices 130 (e.g., the processor 132), the fleet management system 110 (e.g., the processor 112), and the computing devices 150 (e.g., the processor 152), from one or more of the telematics devices 130 (e.g., the data storage 134), the fleet management system 110 (e.g. the data storage 112), and the computing devices 150 (e.g., the data storage 154). It is also noted that the various types of data may be received together or separately.

At operation 420 of the method 400 illustrated in FIG. 4, a search zone corresponding to a geographical area within which vehicle stop zones are to be identified may be defined using the map data. In more detail, the search zone may be selected (e.g., by a user) to determine whether vehicle stop zones are present within the corresponding geographical area. How the search zone is defined is not particularly limited. For example, a user may employ one or more of the computing devices 150 to manually select the boundaries of the search zone over a portion of a map of a geographical area (e.g., obtained from the map data). In such examples, the search zone may be any shape as defined by the user (e.g., a rectangle, square, circle, etc.). Additionally, or alternatively, a user may select a search zone that corresponds to pre-defined boundaries, such as country borders, state or provincial borders, city limits, counties, neighbourhoods, etc. (e.g., obtained from the map data). Of course, other techniques for defining the search zone are possible and are contemplated. Further, as will be described herein, the size of the search zone is also not particularly limited, as the systems and methods of the present disclosure may allow for efficient processing of large-scale data (e.g., telematics data collected from vehicle fleets operating across wide geographical areas).

As shown at operation 430 of the method 400, a plurality of vehicle stop points located within the search zone may be identified using the telematics data, each of the vehicle stop points representing a location at which a vehicle stopped. That is, each vehicle stop that occurred within the search zone may be identified using the telematics data. As described herein, the telematics data may include geospatial data pertaining to the vehicle or vehicles from which it is collected. The geospatial data may be used to indicate the location of the vehicle or vehicles during a vehicle stop by way of, for example, GPS coordinates (e.g., latitudinal and longitudinal information).

The occurrence of a vehicle stop may be determined based on various types of telematics data. For example, as described herein, a vehicle may be determined to have stopped based on engine data associated therewith (e.g., the engine ignition status, engine idle status, etc.), geospatial data associated therewith (e.g., vehicle speed data, changes in vehicle location or a lack thereof, etc.), and the like. As a yet further example, in some embodiments, a vehicle may be determined to stop if the vehicle engine ignition status is indicated to be "off' (i.e., the vehicle engine is not running), if the vehicle speed is maintained at 0 km/h for a period of time (i.e., indicating that the vehicle is not moving), if the vehicle location does not change over a period of time (i.e., also indicating that the vehicle is not moving), or a combination thereof.

As described herein, the telematics data may be received, for example, from the telematics devices 130 installed in the vehicles 120. In more detail, geospatial data such as location data may be obtained from a GPS receiver of the telematics device 130. As well, or alternatively, geospatial data such as speed data may be obtained from a speed sensor of the vehicle 120 or derived from the location data obtained from a GPS sensor of the telematics device 130. Engine data such as vehicle ignition status may be obtained by the telematics devices 130 from the vehicle components 124 via the vehicle interface 126.

When identifying the vehicle stop points that occurred within the search zone, in some embodiments, the telematics data and the map data may be used in combination to map the locations of the vehicle stop points to the geographical area corresponding to the search zone. The search zone including the vehicle stop points may then be displayed to a user (e.g., via one or more of the computing devices 150) as a visual representation thereof.

Referring back to FIG. 4, as shown at operation 440, the search zone may be dynamically partitioned into a plurality of search subzones based at least in part on the number of vehicle stop points present within the search zone.

In more detail, the vehicle stop points encompassed by each of the search subzones may be used to identify vehicle stop clusters and, in turn, vehicle stop zones within the search zone. Thus, each search subzone may be generated to encompass a number of vehicle stop points that may be useful for such operations. However, as will be appreciated, the density or distribution of vehicle stop points within a given search zone may not be consistent (e.g., there may be a greater number of vehicle stop points in some areas of the search zone than others). As a result, if the search zone is partitioned into equally sized search subzones, the number of vehicle stop points encompassed by each search subzone may vary greatly and, in some cases, may not be particularly useful for downstream operations. In contrast, by dynamically partitioning the search zone, the generated search subzones may be independently sized such that they each encompass a selected number, or range of numbers, of the vehicle stop points that may be useful for, for example, identifying vehicle stop clusters.

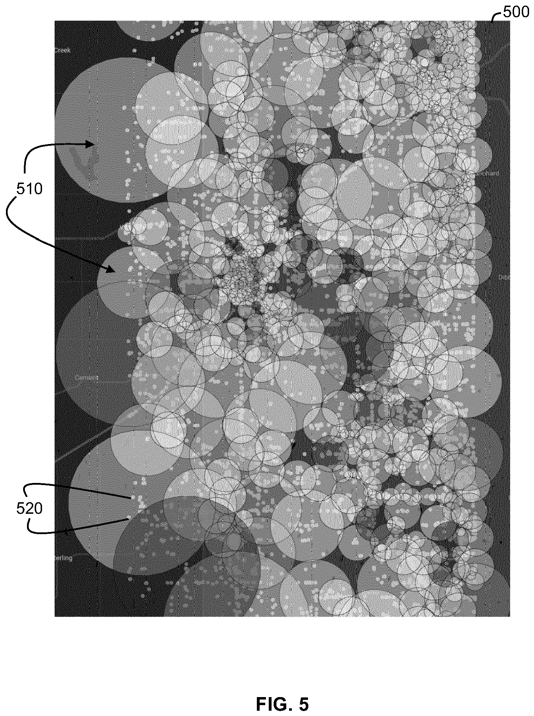

An example of a search zone partitioned into search subzones is illustrated in FIG. 5. As shown, a search zone 500 is partitioned into a plurality of search subzones 510. Each of the plurality of subzones 510 is independently sized such that a selected number of vehicle stop points 520 may be encompassed thereby. As a result, search subzones 510 including more sparsely located vehicle stop points 520 may be larger in size as compared to those including more densely located vehicle stop points 520.

It is also noted that, in the illustrated example, the search subzones 510 are circular in shape. However, the search subzones 510 may be any suitable shape (e.g., as selected by a user). For example, as the dynamic partitioning of the search zone 500 into the search subzones 510 is based at least in part on the number of vehicle stop points 520 located therein, areas of the search zone 500 including no vehicle stop points 520 (e.g., the lower left corner of the search zone 500) may not be partitioned into, or included in, a search subzone 510. While such implementations may be beneficial due to the overall area of the search zone 500 that is selected for processing being lowered, it may be desired that search zone 500 be completely partitioned to search subzones 510 such that there is no area of the search zone 500 that is not included in a search subzone 510. In such cases, the search subzones 510 may be generated as shapes other than circles such as regular or non-regular polygons (e.g., user-defined polygons).

The dynamic partitioning of the search zone (e.g., the search zone 500) may be completed using any suitable technique. For example, in some embodiments, the dynamic partitioning of the search zone may comprise operating the at least one processor (e.g., one or more of the processors 112, 132, and 152) to generate a plurality of initial search subzones, and adjust an area of each of the initial search subzones such that each of the search subzones encompasses a number of vehicle stop points that is greater than or equal to a selected minimum number of vehicle stop points, less than or equal to a selected maximum number of vehicle stop points, or a combination thereof. In such embodiments, the initial search subzones may be generated as a pre-selected size and shape (e.g., a circle having a default radius) and then each independently adjusted based on the number of vehicle stop points encompassed thereby. For example, if an initial search subzone encompasses a number of vehicle stop points less than a selected minimum, the area of the search zone may be increased to a point at which at least the minimum number of vehicle stop points is encompassed. Conversely, if an initial search subzone encompasses a number of vehicle stop points greater than a selected maximum, the area of the search zone may be decreased to a point at which at most the minimum number of vehicle stop points is encompassed.

In some embodiments, the area of the initial search subzones may be adjusted based on pre-defined rules. For example, if an initial search subzone does not encompass a selected minimum number of vehicle stop points, a radius thereof may be doubled until the search subzone encompasses a number of vehicle stop points within a pre-defined range. Conversely, in that example, if the initial search subzone encompasses more than a selected maximum number of vehicle stop points, a radius thereof may be halved until the search subzone encompasses a number of vehicle stop points within the pre-defined range. Of course, the areas of initial search subzones may be adjusted based on other pre-defined rules if so desired.

It is noted that the partitioning of the search zone into search subzones may advantageously allow for efficient processing of large-scale telematics data when identifying vehicle stop zones. In more detail, in a given search zone, hundreds of thousands, or even millions, of vehicle stop points may be identified. The inventors of the present disclosure found that, by partitioning the search zone into a plurality of search subzones, the systems and methods described herein are capable of, and may be well-suited for, multi-processing implementations. As will be appreciated, using multi-processing, one or more of the operations of the systems and methods of the present disclosure may be implemented across a plurality of processors (e.g., two or more of each of the processors 112, 132, and 152), a plurality of cores of each processor, or a combination thereof to provide additional advantages such as, but not limited to, increased throughput (i.e., more data may be processed in a given amount of time), increased reliability (e.g., if one processor fails, the systems and methods and the present disclosure may still be implemented using the remaining processors), and the like. As described herein, conventional techniques for identifying vehicle stop zones may not be particularly well-suited for multi-processing implementations and thus may not be capable of processing large-scale telematics data or affording any of the additional advantages provided by multi-processing.

Referring back to FIG. 4, as shown at operation 450, one or more vehicle stop clusters may be identified within each of the search subzones. The vehicle stop clusters may be identified independently for each search subzone such that vehicle stop points encompassed by more than one search subzone are considered when identifying vehicle stop clusters for each search subzone within which they are located. Generally, each vehicle stop cluster may comprise at least one vehicle stop point. However, a different minimum number of vehicle stop points per vehicle stop cluster may be selected if so desired. For example, for search zones encompassing a relatively large number of vehicle stop points, a higher minimum number of vehicle stop points per vehicle stop cluster may be suitable.

The identifying of the vehicle stop clusters may be completed using any suitable technique. For example, the identifying of the one or more vehicle stop clusters may comprise operating the at least one processor (e.g., one or more of the processors 112, 132, and 152) to identify the one or more vehicle stop clusters using a clustering algorithm. In some embodiments, the clustering algorithm may be a density-based clustering algorithm, such as, but not limited to, a Hierarchical Density-Based Spatial Clustering of Applications with Noise (HDBSCAN) algorithm. As will be appreciated, parameters of the clustering algorithm (e.g., minimum cluster size, minimum sample size, cluster selection, etc.) clustering may be adjusted based on, or in conjunction with, the parameters of the search subzones (e.g., minimum or maximum number of vehicle stop points per search subzone).

Further, as will be appreciated, some techniques for identifying the vehicle stop clusters (e.g., a clustering algorithm) may identify potential outliers (e.g., vehicle stop points that may not contribute to the vehicle stop clusters). In such cases, it may be beneficial to remove the outliers from consideration by the systems and methods of the present disclosure. For example, by removing outliers, there may be less data to be processed, thereby potentially increasing the efficiency of the systems and methods of the present disclosure. As well, as will be appreciated, by removing outliers, the vehicle stop zones identified from the vehicle stop clusters may be more accurate, as vehicle stop points that may not contribute to the vehicle stop clusters may be removed. Thus, in some embodiments, the identifying of the vehicle stop clusters may comprise operating the at least one processor to identify and remove vehicle stop point outliers (e.g., using a clustering algorithm).

As well, or alternatively, outliers may be removed from the vehicle stop clusters after the vehicle stop clusters have been identified. For example, in some embodiments, the method of identifying vehicle stop zones 400 may further comprise operating the at least one processor (e.g., the processor 112, 132, and/or 152) to remove any within-cluster outliers from each of the vehicle stop clusters. The within-cluster outliers may be identified using any suitable technique. For example, the within-cluster outliers may be identified and removed based at least in part on a nearest-neighbour distance of the vehicle stop cluster, which, as will be appreciated, represents for a given vehicle stop point the distance to a closest other vehicle stop point within the vehicle stop cluster. In more detail, in such embodiments, the within-cluster outliers may be removed based on an interquartile range of a median nearest-neighbor distance of the vehicle stop cluster. For example, if a given vehicle stop point of the vehicle stop cluster has a nearest-neighbor distance that falls within a selected quartile of an interquartile range based on a median nearest-neighbor distance of the vehicle stop cluster, that vehicle stop point may be considered a within-cluster outlier and removed.

However, as will be appreciated, if outliers are removed from a vehicle stop cluster after the identification thereof, the number of vehicle stop points of the vehicle stop cluster will decrease. So, it may be the case that, after the outliers have been removed, the vehicle stop cluster has fewer vehicle stop points than required to be considered a vehicle stop cluster. For example, as described herein, in some embodiments, each vehicle stop cluster may comprise two or more vehicle stop points. In such embodiments, if removing an outlier from a vehicle stop cluster causes the vehicle stop cluster have fewer than two vehicle stop points, the vehicle cluster may no longer be considered a cluster. In such cases, the remaining vehicle stop points associated therewith may be removed (e.g., also considered outliers).

As shown at operation 460 of FIG. 4, vehicle stop zones may be identified by combining vehicle stop clusters that share one or more of the vehicle stop points. As described herein, the vehicle stop zones may represent areas of the search zone wherein vehicles tend to stop (e.g., turn engine ignition "off", not move for a period of time, etc.). Thus, a vehicle stop cluster may generally indicate a vehicle stop zone. However, as also described herein, vehicle stop points may be encompassed by more than one search subzone and, because the identification of vehicle stop clusters is performed independently for each search subzone, may be included in more than one vehicle stop cluster. In such cases, discrete vehicle stop clusters that include one or more of the same vehicle stop points may be combined into a single vehicle stop cluster, which may, in turn, be used to identify a single vehicle stop zone.

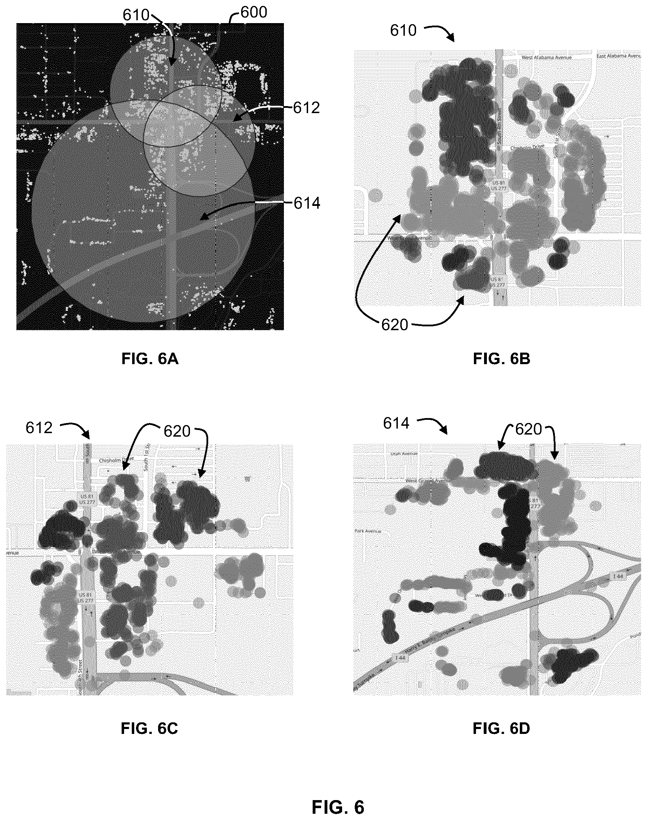

In more detail, in some embodiments, the identifying the of the vehicle stop zones by identifying the vehicle stop clusters may be performed by operating the at least one processor (e.g., one or more of the processors 112, 132, and 152) to generate a graph comprising a plurality of nodes and edges, wherein each node represents one of the vehicle stop clusters and each edge represents the sharing of the one or more vehicle stop points; identify one or more node groupings, each node grouping comprising a plurality of nodes that are interconnected by one or more edges; and generate, for each node grouping, one or more vehicle stop superclusters by combining the vehicle stop points of each of the vehicle stop clusters represented by the nodes of the node groupings. An example of such a technique is illustrated in FIG. 6A to FIG. 6G.

FIG. 6A shows a search zone 600 partitioned into overlapping search subzones 610, 612, and 614. Zoomed-in areas covered by the search subzones 610, 612, and 614 are shown in FIG. 6B, FIG. 6C., and FIG. 6D, respectively. As shown, each of the search subzones 610, 612, and 614 has identified therein a plurality of vehicle stop clusters 620. As also shown, due to the overlapping of the search subzones 610, 612, and 614, some of the vehicle stop clusters 620 of one of the search subzones 610, 612, and 614 may share one or more vehicle stop points with one or more of the vehicle stop clusters 620 of another of the search subzones 610, 612, and 614. In such cases, as described above, it may be appropriate to merge the vehicle stop clusters 620 that share one or more of the vehicle stop points.

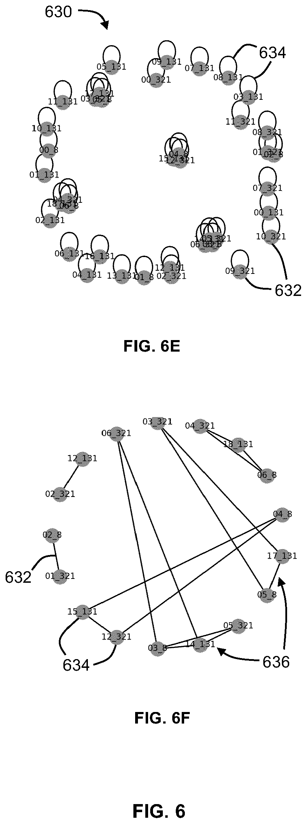

Referring now to FIG. 6E, there is shown a graph 630 generated based on the vehicle stop clusters 620 identified within each of the search subzones 610, 612, and 614. In more detail, the graph 630 comprises a plurality of nodes 632 and edges 634. Each of the nodes 632 represents one of vehicle stop clusters 620 and each of the edges 634 represents a sharing of a vehicle stop point. For example, if two nodes 632 are interconnected by an edge 634, those two nodes 632 share a vehicle stop point. It is noted that, in the illustrated example, nodes 632 representing vehicle stop clusters 620 that do not share any vehicle stop points have edges 634 that extend therefrom and terminate thereat, forming a loop. Of course, it will be appreciated that such edges 634 (i.e., the looped edges) may not be necessary to include and the vehicle stop clusters 620 that do not share any vehicle stop points may each be represented as a single isolated node interconnected with no edges 634.

Once the graph 630 is generated, as shown in FIG. 6F, one or more node groupings 636 may be identified. As described herein, the node groupings 636 comprise a plurality of the nodes 632 that are interconnected by one or more of the edges 634. Thus, the node groupings 636 may represent vehicle stop clusters 620 that may be merged due to sharing one or more vehicle stop points.

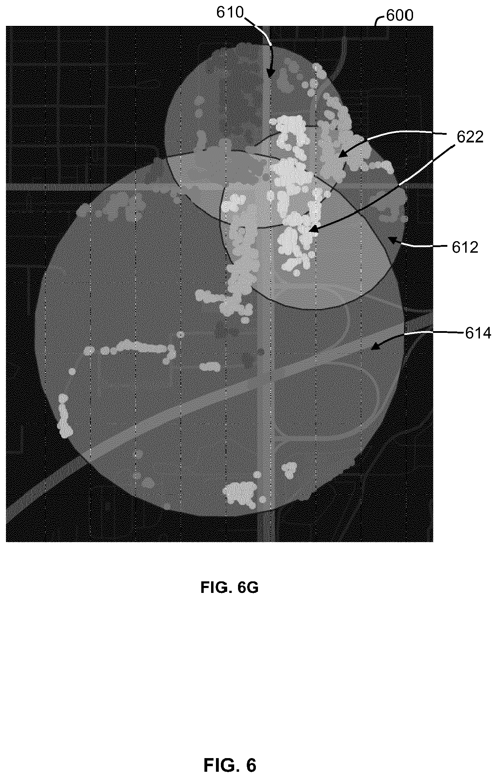

FIG. 6G shows the search zone 600, the search subzones 610, 612, and 614 and the vehicle stop clusters 620 identified therein. As shown, the vehicle stop clusters 620 represented by the nodes 632 of the node groupings 636 have been combined to generate vehicle stop superclusters 622, which span multiple of the search subzones 610, 612, and 614. As will be appreciated, the vehicle stop superclusters 622 may provide a more accurate representation of vehicle stop patterns and, in turn, vehicle stop zones, as they are not limited to the vehicle stop points of a given one of the search subzones 610, 612, and 614.

While, as described above, it may be useful to combine certain vehicle stop clusters, it may also be desirable in some cases to divide vehicle stop clusters. For example, in some embodiments, the identifying the of the vehicle stop zones may further comprise operating the at least one processor (e.g., the processor 112, 132, and/or 152) to divide each of the one or more vehicle stop clusters that span one or more boundaries into discrete vehicle stop clusters. For example, if an identified vehicle stop cluster is found to span a roadway (e.g., identified using the map data), it may be appropriate to divide the identified vehicle cluster into two discrete vehicle clusters at the roadway, as different sides of a roadway may correspond to different properties and, in turn, different vehicle stop zones. Of course, vehicle stop clusters may be divided along boundaries other than roadways. For example, each boundary may be an infrastructure boundary (e.g., a roadway, a bridge, etc.), a topographical boundary (e.g., a river, an elevation difference, etc.), a regulatory boundary (e.g., a property line), or a combination thereof. Information pertaining to the boundaries (e.g., size, type, location, etc.) may be obtained, for example, from the map data.

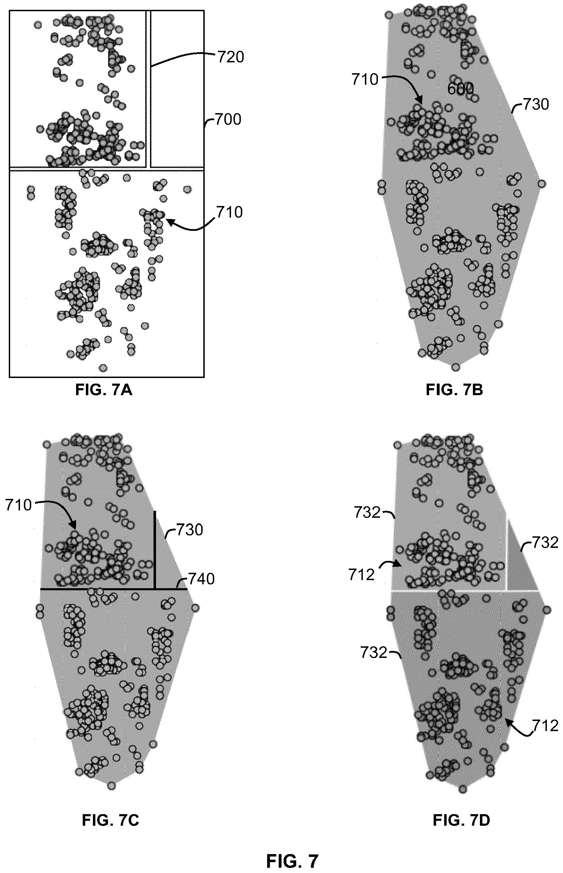

In some embodiments, the dividing of each vehicle stop cluster that spans a boundary into discrete vehicle stop clusters may comprise operating the at least one processor to: generate, for each vehicle stop cluster that spans the one or more boundaries, a cluster polygon that encompasses the vehicle stop cluster; generate, for each of the one or more boundaries, a boundary polygon representing the boundary; and divide the cluster polygon into a plurality of cluster sub-polygons based on an overlap between the cluster polygon and the boundary polygon, each of the cluster sub-polygons encompassing one of the discrete vehicle stop clusters. An example of such a technique is illustrated in FIG. 7A to FIG. 7D.

As shown in FIG. 7A, a search zone 700 has identified therein a vehicle stop cluster 710 that spans a roadway 720. As described above, the presence of the roadway 720 may indicate that the vehicle stop cluster 710 should be considered to be multiple discrete vehicle stop clusters when identifying vehicle stop zones, as vehicles may stop on certain sides of the roadway 720 for different reasons (e.g., parking lots of different businesses).

Referring now to FIG. 7B, there is shown a generated cluster polygon 730 encompassing the vehicle stop cluster 710. The cluster polygon 730 may be generated using any suitable technique. For example, in the illustrated embodiment, the cluster polygon 730 may be a convex hull of the vehicle stop cluster 710.

FIG. 7C shows a generated boundary polygon 740 representing the roadway 720, overlayed on the cluster polygon 730. In some embodiments, the area of boundary polygon 740 may be removed, or subtracted, from the area of the cluster polygon 730 to generate a plurality of cluster sub-polygons 732, as shown in FIG. 7D. As described herein, each of the cluster sub-polygons 732 may encompass a discrete vehicle stop cluster 712. Thus, the vehicle stop cluster 710 that spanned the roadway 720 has been divided into the discrete vehicle stop clusters 712, based on their location relative to the roadway 720. As described herein, such divisions may be useful for more accurately identifying vehicle stop clusters and, in turn, vehicle stop zones. As also described herein, conventional techniques may not account for such boundaries and, as a result, may not accurately identify discrete vehicle stop zones that are close in proximity.

Further, as will be appreciated, the discrete vehicle stop clusters 712 will have fewer vehicle stop points than the vehicle stop clusters 710 originally identified. So, it may be the case that a discrete vehicle stop 712 has fewer vehicle stop points than required to be considered a vehicle stop cluster. In such cases, as described herein, the discrete vehicle stop cluster 712 and the vehicle stop point or points associated therewith may be removed (e.g., considered outliers).

As described herein, vehicle stop clusters may be identified along infrastructure such as roadways (e.g., highways, freeways, streets, roads, avenues, alleyways, etc.) due to, for example, intersections, areas with persistent traffic bottle necks, on-street parking, etc. Thus, it may be the case that the cluster polygon is also a boundary polygon, in that the cluster polygon encompasses a vehicle stop cluster identified along a roadway or other similar boundary. In such cases, the cluster polygon may be divided using, for example, the techniques described above if appropriate or desired. However, as will be appreciated, it may in some cases be difficult to divide vehicle stop clusters occurring along a roadway, as, due to how the roadways may interconnect (e.g., intersections, forks in roadways, etc.), the boundaries spanned by the vehicle stop clusters may be difficult to identify. Thus, in such cases, it may be useful to divide such vehicle stop clusters based on the types of roadways spanned thereby. That is, a vehicle stop cluster identified along a particular type of roadway may be divided into discrete vehicle stop clusters if the vehicle stop cluster spans a roadway that is of a different type. In more detail, a vehicle stop cluster spanning more than one type of roadway may be divided at those intersections, as the different roadway types may indicate different, distinct vehicle stop zones. For example, if a vehicle stop cluster spans both a highway and a street, it may be appropriate to divide the vehicle stop cluster into discrete vehicle stop clusters at the point at which the highway and the street meet.

As described herein, the identified vehicle stop zones may be used for a number of downstream applications. For example, in the context of fleet management, a user may classify the identified vehicle stop zones as areas of interest that are relevant to their operations (e.g., customer parking lots, supplier parking lots, etc.). A user may then track when a vehicle of their fleet enters and/or exits one of the areas of interest, thereby providing additional information that may be used to manage various aspects of their fleet (e.g., driver locations, delivery timelines, vehicle availability, etc.).

It may therefore be desirable to define one or more boundaries of each vehicle stop zone. By defining boundaries of each vehicle stop zone, the vehicle stop zones may be more easily represented on, for example, a display of a computing device (e.g., one or more of the computing devices 150). As well, the boundaries may be used as "geofences", allowing a user to more easily determine, for example, whether a vehicle of their vehicle fleet has entered and/or exited the vehicle stop zone, as a telematics device (e.g., the telematics device 130) may be operable to indicate to a fleet management system (e.g., the fleet management system 110) that the vehicle in which it is installed has crossed the geofence.

Thus, in some embodiments, the identifying of the vehicle stop zones may comprise operating the at least one processor (e.g., one or more of the processors 112, 132, and 152) to generate, for each vehicle stop cluster, a bounding polygon encompassing the vehicle stop cluster. The bounding polygon may be any suitable polygon. For example, it may in some cases be useful to generate a bounding polygon that encompasses an area larger than that occupied by the vehicle stop cluster. It may be useful to generate a bounding polygon that more-tightly fits the vehicle stop cluster (e.g., a convex hull), as such a bounding polygon may provide a more accurate representation of a vehicle stop zone based on the vehicle stop cluster.

The bounding polygon may be generated using any suitable technique. For example, in some embodiments, the generating of the bounding polygon may comprise operating the at least one processor to: generate a bounding graph comprising a plurality of bounding nodes and bounding edges interconnected therewith, each bounding node representing one of the vehicle stop points of the vehicle stop cluster, and each bounding edge representing a shortest distance between two of the bounding nodes; identify border nodes of the bounding graph, the border nodes being bounding nodes that are located at a perimeter of the vehicle stop cluster; and generate the bounding polygon from the border nodes and the edges interconnecting the border nodes.

The bounding graph may be generated by, for example, performing a Delaunay Triangulation of the vehicle stop points of the vehicle stop cluster. As will be appreciated, Delauney Triangulations generate edges between points (i.e., the vehicle stop points) such that none of the points are located within the circumcircle of any of the triangles formed by the edges extending between the points to thereby provide an optimized graph. In the context of the present disclosure, when performing a Delauney Triangulation, the resulting graph may be the bounding graph, the points of the resulting graph may be the bounding nodes, and the edges of the resulting graph may be the bounding edges.

Once the bounding graph is generated, the border nodes may be identified. As will be appreciated, the border nodes may represent bounding nodes of the bounding graph that are located at the perimeter of the vehicle stop cluster in that they are farthest from a center of the vehicle cluster in a given direction and/or that are adjacent an area in which substantially no other bounding nodes are present, such that the border nodes, and the bounding edges interconnecting them, may be used to define the sides of the bounding polygon.

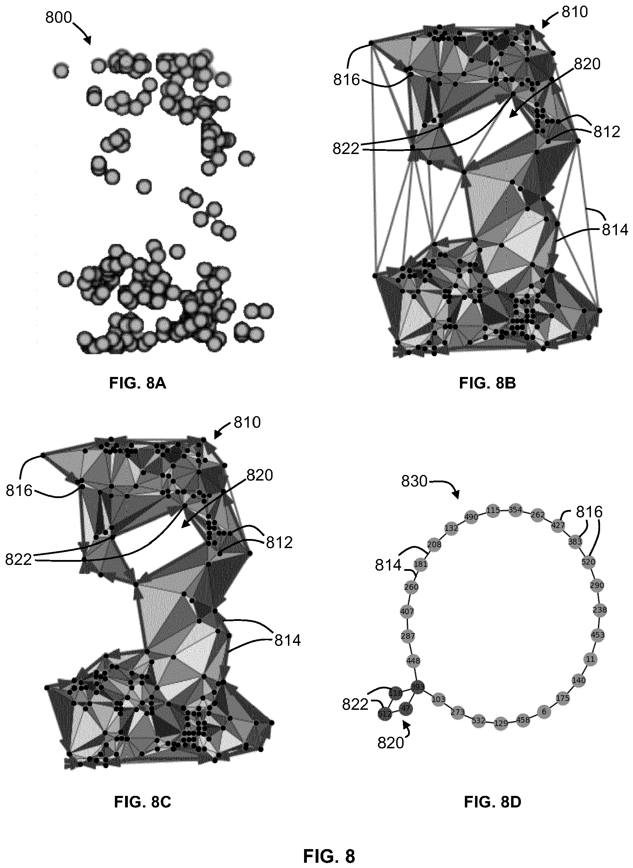

For additional clarity, an example of the generation of a bounding polygon for a vehicle stop cluster using a Delauney Triangulation according to some embodiments of the present disclosure is illustrated in FIG. 8A to Fig. 8E.

FIG. 8A shows an identified vehicle stop cluster 800, prior to the generation of a bounding polygon. FIG. 8B shows a bounding graph 810 generated using a Delauney Triangulation. As shown, the bounding graph 810 comprises bounding nodes 812 and bounding edges 814.

The bounding graph 810 also has border nodes 816 identified. However, as shown, certain border nodes 816 may be interconnected to more than two other border nodes 816 such that some of the bounding edges 814 extend outside of other border nodes 816 such that a bounding polygon generated thereby may not represent the border nodes 816 located within those bounding edges 814. Similarly, as shown, the bounding graph 810 may include a subgraph 820 that forms a "hole" therein. The subgraph 820 may be formed by subgraph nodes 822, which are similar to border nodes 816 in that they may be used to define a border or side of the subgraph 820. However, as will be appreciated, due to the subgraph nodes 822 being located within the border nodes 816 and interconnecting bounding edges 814, the subgraph 820 may not be represented in a bounding polygon generated from the border nodes 816 and the bounding edges 814 interconnected each thereof.

Thus, it may be useful to optimize the generating of a bounding polygon to account for cases where certain border nodes 816 and/or subgraph nodes 822 may not be included when defining the sides thereof, so that the generated bounding polygon accurately represents the distribution of the vehicle stop points of the vehicle stop cluster 800. For example, in some embodiments, the generating of the bounding polygon may further comprise operating the at least one processor to remove any bounding edges (e.g., the bounding edges 814) having a length greater than a predetermined threshold. By removing bounding edges having a length greater than a predetermined threshold, instances where border nodes are interconnected with more than two other border nodes may be reduced, which, in turn, may reduce the likelihood that a bounding polygon generated thereby does not represent border nodes encompassed by bounding edges interconnecting other border nodes.

For example, FIG. 8C shows the bounding graph of FIG.8B with bounding edges 814 greater than a predetermined threshold removed. As shown, by removing those bounding edges 814, an increased number of the border nodes 816 may be used to generate a bounding polygon, thereby providing a bounding polygon that may more accurately represent the distribution of the vehicle stop points of the vehicle stop cluster 800.

As described above, the bounding graph 810 has a "hole", formed by subgraph nodes 822 of the subgraph 820 therewithin (i.e., within the border nodes 816 and the bounding edges 814 interconnecting each thereof). As shown, the subgraph 820 may also include one or more of the border nodes 816. As will be appreciated, a border node 816 that forms part of the subgraph 820 will generally be interconnected via the bounding edges 814 to more than two other bounding nodes 812 (e.g., other border nodes 816 and/or subgraph nodes 822). As well, as described above, the subgraph nodes 822 may be considered to be border nodes in that they are boundary nodes that are adjacent an area in which substantially no other bounding nodes are present. Thus, in some embodiments, the generating of the bounding polygon may further comprise operating the at least one processor to: identify border nodes interconnected with more than two other border nodes, identify whether any of the more than two other border nodes are subgraph nodes in that they form at least part of a subgraph of the bounding graph; and generate the bounding polygon from the border nodes, the subgraph nodes, and the boundary edges connecting each thereof.

The identification of whether the border nodes 816 may be considered subgraph nodes 822 in that they form part of the subgraph 820, may be completed using any suitable technique. For example, as shown in FIG. 8D, in some embodiments, an ordered graph 830 may be generated, the ordered graph 830 comprising the border nodes 816 arranged in sequence and interconnected via the bounding edges 814. As shown, one of the border nodes 816 is interconnected with the subgraph nodes 822 forming the subgraph 820, which is represented as a separate loop from that formed by the border nodes 816 of the bounding graph 810.

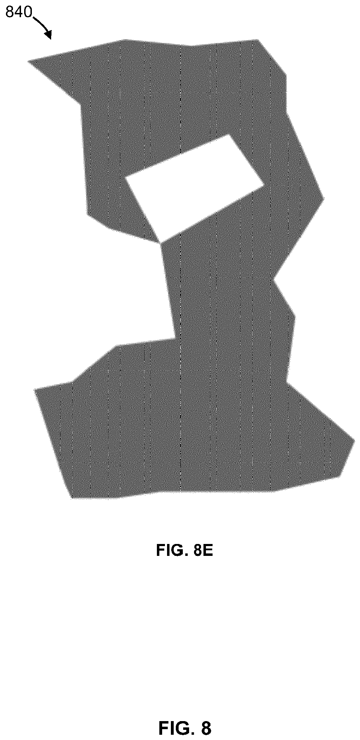

As described herein, once the border nodes 816 and, if present, any subgraph nodes 822 are identified, the bounding polygon may be generated therefrom. In more detail, the border nodes 816, the subgraph nodes 822 (if present), and the bounding edges 814 interconnecting each thereof may be used to define the sides, or borders, of a bounding polygon. FIG. 8E shows a bounding polygon 840 generated from the border nodes 816, the subgraph nodes 822, and the bounding edges 814 interconnecting each thereof of the bounding graph 810, representing the distribution of the vehicle stop points of the vehicle stop cluster 800.

As also shown, the bounding polygon 840 may be formatted for display to a user (e.g., via a display of the one or more computing devices 150). For example, the bounding polygon 840 may be filled with a solid color. As another example, the bounding polygon 840 may have the vehicle stop points of the vehicle stop cluster 800 hidden (e.g., to simplify viewing by a user) or may instead have them visible (e.g., to provide further information to a user). Of course, other display configurations are possible and are contemplated.

The inventors of the present disclosure found that the above-described embodiments for generating the bounding polygon are not only robust for the generation of a bounding polygon that accurately reflects the distribution of vehicle stop points of the vehicle stop cluster but are also computationally efficient as well as suitable for multi-processing implementations and thus may afford the advantages associated therewith previously described herein.

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are discussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for identifying vehicle stop zones, the system comprising:
at least one data storage operable to store at least telematics data and map data; and
at least one processor in communication with the at least one data storage, the at least one processor operable to:
define a search zone, using the map data, corresponding to a geographical area within which vehicle stop zones are to be identified;
identify, using the telematics data, a plurality of vehicle stop points located within the search zone, each of the vehicle stop points representing a location at which a vehicle stopped;
dynamically partition the search zone into a plurality of search subzones based at least in part on a number of vehicle stop points present within the search zone;
within each search subzone, identify one or more vehicle stop clusters, each vehicle stop cluster comprising at least one of the vehicle stop points; and
identify vehicle stop zones by combining vehicle stop clusters that share one or more of the vehicle stop points.

2. The system of claim 1, wherein the at least one processor is operable to dynamically partition the search zone into the plurality of search subzones by:
generating a plurality of initial search subzones; and
adjusting an area of each initial search subzone such that each of the search subzones encompasses a number of vehicle stop points that is greater than or equal to a selected minimum number of vehicle stop points, less than or equal to a selected maximum number of vehicle stop points, or a combination thereof.

3. The system of claim 1 or 2, wherein the at least one processor is operable to combine the vehicle stop clusters that share one or more of the vehicle stop points by:
generating a graph comprising a plurality of nodes and edges, wherein each node represents one of the vehicle stop clusters and each edge represents the sharing of the one or more vehicle stop points;
identifying one or more node groupings, each node grouping comprising a plurality of nodes that are interconnected by one or more edges; and
generating, for each node grouping, one or more vehicle stop superclusters by combining the vehicle stop points of each of the vehicle stop clusters represented by the nodes of the node groupings.

4. The system of any one of claims 1 to 3, wherein the at least one processor is further operable to divide each of the one or more vehicle stop clusters that span one or more boundaries into discrete vehicle stop clusters.

5. The system of claim 4, wherein the at least one processor is further operable to divide each of the one or more vehicle stop clusters into the discrete vehicle stop clusters by:
generating, for each vehicle stop cluster that spans the one or more boundaries, a cluster polygon that encompasses the vehicle stop cluster;
generating, for each of the one or more boundaries, a boundary polygon representing the boundary; and
dividing the cluster polygon into a plurality of cluster sub-polygons based on an overlap between the cluster polygon and the boundary polygon, each of the cluster sub-polygons encompassing one of the discrete vehicle stop clusters.

6. The system of any one of claims 1 to 5, wherein the at least one processor is further operable to identify the vehicle stop zones by generating, for each vehicle stop cluster, a bounding polygon encompassing the vehicle stop cluster.

7. The system of claim 6, wherein the at least one processor is operable to generate each bounding polygon by:
generating a bounding graph comprising a plurality of bounding nodes and bounding edges interconnected therewith, each bounding node representing one of the vehicle stop points of the vehicle stop cluster, and each bounding edge representing a shortest distance between two of the bounding nodes;
identifying border nodes of the bounding graph, the border nodes being bounding nodes that are located at a perimeter of the vehicle stop cluster; and
generating the bounding polygon from the border nodes and the edges interconnecting the border nodes.

8. A method for identifying vehicle stop zones, the method comprising operating at least one processor to:
receive telematics data and map data;
define a search zone, using the map data, corresponding to a geographical area within which vehicle stop zones are to be identified;
identify, using the telematics data, a plurality of vehicle stop points located within the search zone, each of the vehicle stop points representing a location at which a vehicle stopped;
dynamically partition the search zone into a plurality of search subzones based at least in part on a number of vehicle stop points present within the search zone;
within each search subzone, identify one or more vehicle stop clusters, each vehicle stop cluster comprising at least one of the vehicle stop points; and
identify vehicle stop zones by combining vehicle stop clusters that share one or more of the vehicle stop points.

9. The method of claim 8, wherein the dynamic partitioning of the search zone into the plurality of search zones comprises operating the at least one processor to:
generate a plurality of initial search subzones; and
adjust an area of each initial search subzone such that each of the search subzones encompasses a number of vehicle stop points that is greater than or equal to a selected minimum number of vehicle stop points, less than or equal to a selected maximum number of vehicle stop points, or a combination thereof.

10. The method of claim 8 or 9, wherein the combining of the of the vehicle stop clusters comprises operating the at least one processor to:
generate a graph comprising a plurality of nodes and edges, wherein each node represents one of the vehicle stop clusters and each edge represents the sharing of the one or more vehicle stop points;
identify one or more node groupings, each node grouping comprising a plurality of nodes that are interconnected by one or more edges; and
generate, for each node grouping, one or more vehicle stop superclusters by combining the vehicle stop points of each of the vehicle stop clusters represented by the nodes of the node groupings.

11. The method of any one of claims 8 to 10, further comprising operating the at least one processor to divide each of the one or more vehicle stop clusters that span one or more boundaries into discrete vehicle stop clusters.

12. The method of claim 11, wherein the dividing of each of the one or more vehicle stop clusters into the discrete vehicle stop clusters comprises operating the at least one processor to:
generate, for each vehicle stop cluster that spans the one or more boundaries, a cluster polygon that encompasses the vehicle stop cluster;
generate, for each of the one or more boundaries, a boundary polygon representing the boundary; and
divide the cluster polygon into a plurality of cluster sub-polygons based on an overlap between the cluster polygon and the boundary polygon, each of the cluster sub-polygons encompassing one of the discrete vehicle stop clusters.

13. The method of any one of claims 8 to 12, wherein the identifying of the vehicle stop zones further comprises operating the at least one processor to generate, for each vehicle stop cluster, a bounding polygon encompassing the vehicle stop cluster.

14. The method of claim 13, wherein the generating of each bounding polygon comprises operating the at least one processor to:
generate a bounding graph comprising a plurality of bounding nodes and bounding edges interconnected therewith, each bounding node representing one of the vehicle stop points of the vehicle stop cluster, and each bounding edge representing a shortest distance between two of the bounding nodes;
identify border nodes of the bounding graph, the border nodes being bounding nodes that are located at a perimeter of the vehicle stop cluster; and
generate the bounding polygon from the border nodes and the edges interconnecting the border nodes.

15. A non-transitory computer-readable medium having instructions stored thereon executable by at least one processor to implement a method for identifying vehicle stop zones, the method comprising operating at least one processor to:
receive telematics data and map data;
define a search zone, using the map data, corresponding to a geographical area within which vehicle stop zones are to be identified;
identify, using the telematics data, a plurality of vehicle stop points located within the search zone, each of the vehicle stop points representing a location at which a vehicle stopped;
dynamically partition the search zone into a plurality of search subzones based at least in part on a number of vehicle stop points present within the search zone;
within each search subzone, identify one or more vehicle stop clusters, each vehicle stop cluster comprising at least one of the vehicle stop points; and
identify vehicle stop zones by combining vehicle stop clusters that share one or more of the vehicle stop points.
